# EUROPEAN PATENT APPLICATION

(11) **EP 4 772 852 A1**
(43) Date of publication of application: **08.07.2026**
(21) Application number: 25169648.0
(22) Date of filing: 10.04.2025
(51) Int. Cl.: G01N 1/38, G01N 15/14

(54) **METHOD FOR SCREENING AND DETECTING BIOLOGICAL PARTICLES**

(30) Priority: 03.01.2025 TW 114100237
(71) Applicant: LiqBio biomedical company limited, New Taipei City 244, Taiwan (TW)
(72) Inventor: OHYANG, CHI-KUN, 333 Taoyuan City (TW); CHIU, TZU-KENG, 242 New Taipei City (TW); ZHU, YU-XIAN, 310 Zhudong Township, Hsinchu County (TW)
(74) Representative: Cabinet Chaillot

(57) **Abstract**

A method for screening and detecting biological particles includes: providing a system (1) for screening and detecting biological particles which includes a channel (10), an optical detecting assembly (20), and a carrier (30), wherein the optical detecting assembly (20) is provided with a detecting light path (R) penetrating through the channel (10) and is for detecting a target biological particle; providing a sample; diluting the sample to form a detected solution; controlling the detected solution to pass through an entrance end (12) of the channel (10); and controlling the carrier (30) to move to an exit end (14) of the channel (10) when the target biological particle in the detected solution, wherein a diluent is provided in the carrier (30); controlling a portion of the detected solution, which includes the target biological particle, to pass through the exit end (14) and to be received by the carrier (30) to dilute the portion of the detected solution.

## Description

### BACKGROUND OF THE INVENTION

### Technical Field

The present invention relates generally to biochemical detecting system, and more particularly to a method for screening and detecting biological particles.

### Description of Related Art

A convention biochemical detecting way is to manually perform detection methods, such as fluorescent staining procedure and immunoprecipitation procedure, on a biological sample for detection. However, the conventional biological detecting way is limited by a lot of factors, such as tools used by an operator and skills of the operator, so that a large sample volume (such as blood, other body fluids, hairs, nails, etc.) is needed. Therefore, microdetection is hard to be performed manually.

Apart from the difficulty of performing the microdetection manually, when the number of biological particles in the biological sample is large, the difficulty of identifying or screening a target biological particle is increased and the accuracy of identifying or screening the target biological particle is decreased. Therefore, how to provide a method for screening and detecting biological particles that could be used in microdetection and could improve the accuracy of identifying and screening the target biological particle, is a problem needed to be solved in the industry.

### BRIEF SUMMARY OF THE INVENTION

In view of the above, the primary objective of the present invention is to provide a method for screening and detecting biological particles, which could be used in microdetection and could improve the accuracy of identifying and screening a target biological particle.

The present invention provides a method for screening and detecting biological particles, including:
providing a system for screening and detecting biological particles, wherein the system for screening and detecting biological particles includes a channel, an optical detecting assembly, and a carrier; the optical detecting assembly is provided with a detecting light path; the detecting light path penetrates through the channel; the optical detecting assembly is configured to detect a target biological particle;
providing a sample;
diluting the sample to form a detected solution;
controlling the detected solution to pass through an entrance end of the channel; and
controlling the carrier to move to an exit end of the channel when the target biological particle in the detected solution is detected by the optical detecting assembly, wherein a diluent is provided in the carrier; controlling a portion of the detected solution, which includes the target biological particle to pass through the exit end and to be received by the carrier to dilute the portion of the detected solution.

With the aforementioned design, through the method for screening and detecting biological particles, microdetection could be performed. Through diluting the sample to form the detected solution, when a number of biological particles in the sample is large, the aggregation of biological particles and the high concentration of the sample could be prevented, which influence the accuracy of the optical detecting assembly detecting the target biological particle. In this way, the accuracy and the stability of the microdetection could be improved.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a flowchart of the method for screening and detecting biological particles according to an embodiment of the present invention; and
FIG. 2 is a block diagram of the system for screening and detecting biological particles according to the embodiment of the present invention.

### DETAILED DESCRIPTION OF THE INVENTION

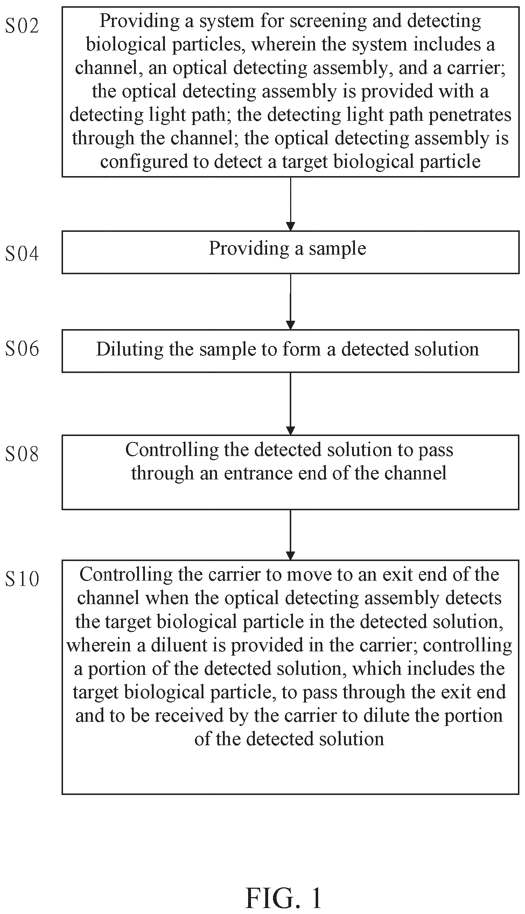

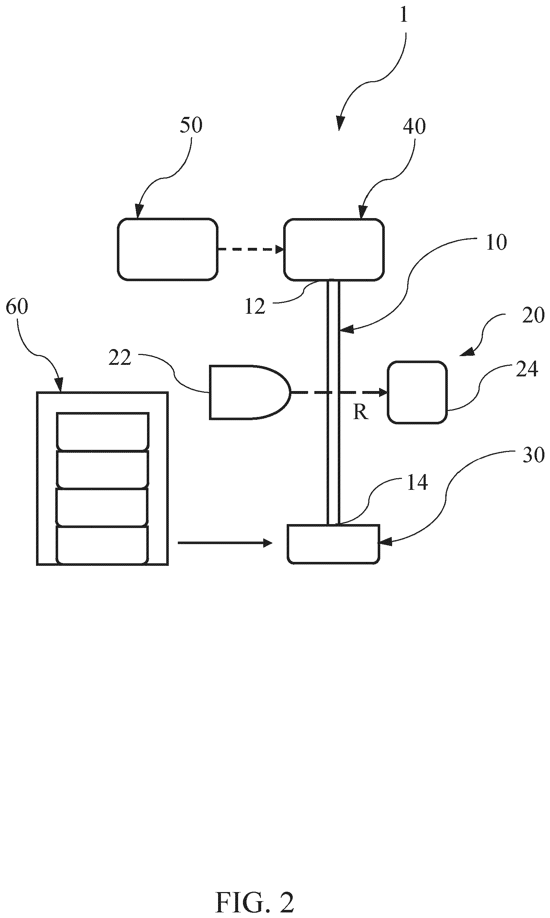

A flowchart of a method for screening and detecting biological particles according to an embodiment of the present invention is illustrated in FIG. 1. The method for screening and detecting biological particles includes the following steps:
Step S02: providing a system 1 for screening and detecting biological particles, wherein the system 1 for screening and detecting biological particles includes a channel 10, an optical detecting assembly 20, and a carrier 30; the optical detecting assembly 20 is provided with a detecting light path R; the detecting light path R penetrates through the channel 10; the optical detecting assembly 20 is configured to detect a target biological particle. In the current embodiment, the method for screening and detecting biological particles is performed by the system 1 for screening and detecting biological particles 1 shown in FIG. 2 as an example. In other embodiments, the method for screening and detecting biological particles could be performed by other systems for screening and detecting biological particles.
Step S04: providing a sample. The sample could be a blood sample, a urine sample, a pleural effusion sample, a peritoneal fluid sample, a spinal fluid sample, a cerebrospinal fluid sample, or an amniotic fluid sample.
Step S06: diluting the sample to form a detected solution. In the current embodiment, the method for screening and detecting biological particles further includes mixing the detected solution thoroughly, so that biological particles are evenly distributed. More specifically, Step S06 includes diluting the sample 5X to 100X. In an embodiment, when the blood sample is 8ml, 32ml of a diluent is added to dilute the sample 5X. In another embodiment, when the blood sample is 4ml, 36ml of the diluent is added to dilute the sample 10X. In still another embodiment, when the blood sample is 1ml, 39ml of the diluent is added to dilute the sample 40X. In still another embodiment, when the blood sample is 1ml, 99ml of the diluent is added to dilute the sample 100X. By diluting the sample 5X to 100X, a concentration of the blood sample could be prevented from being too high, which influences the difficulty of subsequently capturing biological particles; the concentration of the blood sample could be prevented from being too low, which lengthens the time required for subsequently screening and detecting biological particles.

Moreover, the diluent is a buffer for maintaining a pH value of the sample or a cell culture medium for incubating cells, such as Tris buffer, Phosphate buffer, HEPES buffer, MES buffer, MOPS buffer, minimal essential medium (MEM), alpha minimal essential medium (α-MEM), Dulbecco's modified minimal essential medium (DMEM), F-12 Medium (Ham's F-12) Dulbecco's Modified Eagle's Medium/Ham's F-12 (DMEM/F12), RPMI 1640, M-199, etc. In order to maintain the cell viability of the biological particles, the diluent includes a serum with a concentration between 1% and 25%. Preferably, the concentration of the serum is between 2% and 10%. The serum added could be Fetal Bovine Serum (FBS), Bovine Calf Serum (CS), Horse Serum, Human serum, etc. In order to prevent the biological particles from attaching to the channel 10 or the carrier 30, the diluent includes an anticoagulant. The anticoagulant added could be ethylenediaminetetraacetic acid (EDTA), Heparin, Sodium Citrate, Potassium oxalate, or K2EDTA. A pH value and an osmolality of the diluent are identical to the pH value and an osmolality of the sample to be detected, so that the configuration and the status of the biological particles remain stable during detecting. The diluent for diluting the blood sample has the pH value typically ranging from pH6.5 to pH8.0. Preferably, the pH value of the diluent ranges from pH7.0 to pH7.5. The diluent has the osmolality ranging from 200mOsm/kg to 400mOsm/kg. Preferably, the osmolality of the diluent ranges from 250mOsm/kg to 350mOsm/kg. Moreover, the diluent is a transparent solution, so that the detecting light path R of the optical detecting assembly 20 could penetrate through the channel 10 and the diluted detected solution for detecting the target biological particle.

Step S08: controlling the detected solution to pass through an entrance end 12 of the channel 10. In the current embodiment, the channel 10 is a microfluidic channel. The entrance end 12 of the channel 10 communicates with a sample reservoir 40. Another end of the channel 10 is configured to discharge the detected solution. More specifically, a sample loading apparatus 50 is controllable to regulate an amount of the detected solution in the sample reservoir 40 entering the channel 10, thereby controlling the detected solution to be discharged from the channel 10 or to remain stationary and controlling a flowing speed of the detected solution in the channel 10.

Step S10: controlling the carrier 30 to move to an exit end 14 of the channel 10 when the target biological particle in the detected solution is detected by the optical detecting assembly 20, so that the target biological particle is received by the carrier 30 after being discharged from the exit end 14, wherein the optical detecting assembly 20 includes an excitation light source 22 and an optical detector 24; a light emitted by the excitation light source 22 penetrates through the channel 10 along the detecting light path R and then is received by the optical detector 24; in the current embodiment, the excitation light source 22 and the optical detector 24 of the optical detecting assembly 20 are respectively located on two opposite sides of the channel 10; in another embodiment, the excitation light source 22 and the optical detector 24 of the optical detecting assembly 20 could be located on an identical side of the channel 10; the optical detecting assembly 20 is provided with a detecting light path R; the detecting light path R is projected on the target biological particle in the channel 10 and then the optical detecting assembly 20 detects the target biological particle; when the target biological particle in the detected solution is detected by the optical detecting assembly 20, the sample loading apparatus 50 controls the sample reservoir 40 to stop supplying the detected solution to the channel 10, so that the detected solution located in the channel 10 is controlled to stop flowing and the channel 10 is stopped from discharging the detected solution; when the carrier 30 is controlled to move to the exit end 14 of the channel 10, the detected solution located in the channel 10 is controlled to flow, so that a portion of the detected solution, which includes the target biological particle, is discharged from the exit end 14 to be received by the carrier 30; afterwards, the carrier 30 receiving the target biological particle could be moved to, for example, a capturing device for subsequently performing a process of capturing the target biological particle; Step S08 and Step S10 could be repeatedly performed to continuously detect the target biological particle in the detected solution; in the current embodiment, the carrier 30 is controlled by a carrier unit 60 to move to the exit end 14 of the channel 10; in the current embodiment, a volume of the portion of the detected solution being discharged to the carrier 30 is between 5µl and 40µl, wherein the volume of the portion of the detected solution being discharged to the carrier 30 could be 5ul, 10ul, 15ul, 20ul, 25ul, 30ul, 35ul, or 40ul according to the need of an operator; in other embodiments, the volume of the portion of the detected solution being discharged to the carrier 30 could be adjusted according to the need of the operator.

Additionally, the excitation light source 22 could be a laser light source, a mercury lamp, or a LED lamp. A wavelength of the light emitted by the excitation light source 22 could be a visible light or an invisible light. The optical detector 24 could be a photomultiplier tube (PMT) or a charge-coupled device (CCD). Preferably, the optical detecting assembly 20 further includes a light filter disposed on a front end of the optical detector 24. A number of the light filter could be one or plural.

For example, an excitation light of emitted by the excitation light source 22 could enter the channel 10 along the detecting light path R. After the target biological particle in the channel 10 absorbs the excitation light emitted by the excitation light source 22, the target biological particle emits an emission light. The emission light could be a fluorescent light or a luminescent light. After filtering by the light filter, a wavelength of the emission light emitted due to excitation could pass through the light filter to enter the optical detector 24, so that the optical detecting assembly 20 could detect the target biological particle.

In the current embodiment, Step S10 further includes receiving a diluent into the carrier 30 and controlling the portion of the detected solution, which includes the target biological particle, to pass through the exit end 14 and then to be received by the carrier 30 to dilute the portion of the detected solution. In other words, when the portion of the detected solution, which includes the target biological particle, is discharged from the exit end 14 to the carrier 30 receiving the diluent, the dilution could be simultaneously completed, thereby facilitating the subsequent process of capturing of the target biological particle. The diluent could dilute the portion of the detected solution, so that the sample is diluted 50X to 10000X.

Preferably, the diluent dilutes the portion of the detected solution, so that the portion of the detected solution is diluted 10X to 100X. Preferably, the portion of the detected solution is diluted 20X to 60X. In the current embodiment, the portion of the detected solution is between 5µl and 40µl. In an embodiment, the portion of the detected solution is 5µl, and the diluent in the carrier 30 is 495µl, so that the portion of the detected solution is diluted 100X. In another embodiment, the portion of the detected solution is 10µl, and the diluent in the carrier 30 is 490µl, so that the diluent dilutes the portion of the detected solution 50X. In still another embodiment, the portion of the detected solution is 15µl, and the diluent in the carrier 30 is 525µl, so that the portion of the detected solution is diluted 36X. In still another embodiment, the portion of the detected solution is 20µl, and the diluent of the carrier 30 is 500µl, so that the portion of the detected solution is diluted 26X. In still another embodiment, the portion of the detected solution is 25µl, and the diluent of the carrier 30 is 500µl, so that the portion of the detected solution is diluted 21X. In still another embodiment, the portion of the detected solution is 30µl, and the diluent of the carrier 30 is 570µl, so that the portion of the detected solution is diluted 20X. In still another embodiment, the portion of the detected solution is 35µl, and the diluent of the carrier 30 is 490µl, so that the portion of the detected solution is diluted 15X. In still another embodiment, the portion of the detected solution is 40µl, and the diluent in the carrier 30 is 360µl, so that the portion of the detected solution is diluted 10X.

Moreover, in the current embodiment, Step S06 includes diluting the sample 5X to 100X. In other embodiments, a lower limit of diluting the sample is 5X, 10X, or 15X and an upper limit of diluting the sample is 100X, 90X, or 80X. In the current embodiment, Step S10 includes diluting the portion of the detected solution 10X to 100X. In other embodiments, a lower limit of diluting the portion of the detected solution is 10X, 15X, or 20X and an upper limit of diluting the portion of the detected solution is 100X, 80X, or 60X. A lower limit of a total dilution ratio is the lower limit of diluting the sample multiplied by the lower limit of diluting the portion of the detected solution. An upper limit of the total dilution ratio is the upper limit of diluting the sample multiplied by the upper limit of diluting the portion of the detected solution.

In summary, through the method for screening and detecting biological particles of the present invention, microdetection could be performed. Through diluting the sample to form the detected solution, when a number of biological particles in the sample is large, the aggregation of biological particles and the high concentration of the sample could be prevented, which influence the accuracy of the optical detecting assembly 20 in detecting the target biological particle in the detected solution. In this way, the accuracy and the stability of the microdetection could be improved.

## Claims

1. A method for screening and detecting biological particles, comprising:
providing a system (1) for screening and detecting biological particles, wherein the system (1) for screening and detecting biological particles comprises a channel (10), an optical detecting assembly (20), and a carrier (30); the optical detecting assembly (20) is provided with a detecting light path (R); the detecting light path (R) penetrates through the channel (10); the optical detecting assembly (20) is configured to detect a target biological particle;
providing a sample;
diluting the sample to form a detected solution;
controlling the detected solution to pass through an entrance end (12) of the channel (10); and
controlling the carrier (30) to move to an exit end (14) of the channel (10) when the target biological particle in the detected solution is detected by the optical detecting assembly (20), wherein a diluent is provided in the carrier (30); controlling a portion of the detected solution, which comprises the target biological particle, to pass through the exit end (14) and to be received by the carrier (30) to dilute the portion of the detected solution.

2. The method as claimed in claim 1, further comprising diluting the sample 5X to 100X.

3. The method as claimed in claim 1, further comprising mixing the detected solution thoroughly, so that biological particles in the detected solution are evenly distributed after diluting.

4. The method as claimed in claim 1, wherein the sample is a blood sample, a urine sample, a pleural effusion sample, a peritoneal fluid sample, a spinal fluid sample, a cerebrospinal fluid sample, or an amniotic fluid sample.

5. The method as claimed in claim 3, wherein the portion of the detected solution is diluted, so that the sample is diluted 50X to 10000X.

6. The method as claimed in claim 3, wherein the diluent dilutes the portion of the detected solution, so that the portion of the detected solution is diluted 10X to 100X.

7. The method as claimed in claim 3, wherein the diluent dilutes the portion of the detected solution, so that the portion of the detected solution is diluted 20X to 60X.

8. The method as claimed in claim 1, wherein when the target biological particle in the detected solution is detected by the optical detecting assembly (20), the detected solution is controlled to stop flowing in the channel (10); when the carrier (30) is controlled to move to the exit end (14) of the channel (10), the detected solution is controlled to flow in the channel (10), so that the portion of the detected solution, which comprises the target biological particle, passes through the exit end (14) and then is received by the carrier (30).

9. The method as claimed in claim 1, wherein the optical detecting assembly (20) comprises an excitation light source (22) and an optical detector (24); a light emitted by the excitation light source (22) penetrates through the channel (10) along the detecting light path (R) and then is received by the optical detector (24).

## Amended claims

### Amended claims in accordance with Rule 137(2) EPC.

1. A method for screening and detecting biological particles, comprising:
providing a system (1) for screening and detecting biological particles, wherein the system (1) for screening and detecting biological particles comprises a channel (10), an optical detecting assembly (20), and a carrier (30); the optical detecting assembly (20) is provided with a detecting light path (R); the detecting light path (R) penetrates through the channel (10); the optical detecting assembly (20) is configured to detect a target biological particle;
providing a sample;
diluting the sample with a diluent to form a detected solution, wherein the diluent for diluting the sample has a pH value ranging from pH6.5 to pH8.0;
controlling the detected solution to pass through an entrance end (12) of the channel (10); and
controlling the carrier (30) to move to an exit end (14) of the channel (10) when the target biological particle in the detected solution is detected by the optical detecting assembly (20), wherein a diluent is provided in the carrier (30); controlling a portion of the detected solution, which comprises the target biological particle, to pass through the exit end (14) and to be received by the carrier (30) to dilute the portion of the detected solution.

2. The method as claimed in claim 1, further comprising diluting the sample 5X to 100X.

3. The method as claimed in claim 1, further comprising mixing the detected solution thoroughly, so that biological particles in the detected solution are evenly distributed after diluting.

4. The method as claimed in claim 1, wherein the sample is a blood sample, a urine sample, a pleural effusion sample, a peritoneal fluid sample, a spinal fluid sample, a cerebrospinal fluid sample, or an amniotic fluid sample.

5. The method as claimed in claim 3, wherein the portion of the detected solution is diluted, so that the sample is diluted 50X to 10000X.

6. The method as claimed in claim 3, wherein the diluent dilutes the portion of the detected solution, so that the portion of the detected solution is diluted 10X to 100X.

7. The method as claimed in claim 3, wherein the diluent dilutes the portion of the detected solution, so that the portion of the detected solution is diluted 20X to 60X.

8. The method as claimed in claim 1, wherein when the target biological particle in the detected solution is detected by the optical detecting assembly (20), the detected solution is controlled to stop flowing in the channel (10); when the carrier (30) is controlled to move to the exit end (14) of the channel (10), the detected solution is controlled to flow in the channel (10), so that the portion of the detected solution, which comprises the target biological particle, passes through the exit end (14) and then is received by the carrier (30).

9. The method as claimed in claim 1, wherein the optical detecting assembly (20) comprises an excitation light source (22) and an optical detector (24); a light emitted by the excitation light source (22) penetrates through the channel (10) along the detecting light path (R) and then is received by the optical detector (24).
